# EUROPEAN PATENT APPLICATION

(11) **EP 0 807 778 A2**
(43) Date of publication of application: **19.11.1997**
(21) Application number: 97303302.0
(22) Date of filing: 15.05.1997
(51) Int. Cl.: F16K 35/10, F16K 31/60

(54) **Valve lock for handwheel operated valves**

(30) Priority: 17.05.1996 GB 9610323
(71) Applicant: Smith Flow Control Limited, Witham, Essex CM8 3YQ (GB)
(72) Inventor: Cooper, Frank Robert, Clacton on Sea, Essex C016 8JB (GB)
(74) Representative: Lamb, Martin John Carstairs

(57) **Abstract**

In order to provide a valve lock (1) which can be engaged with a plurality of different designs of handwheel operated valve, there is provided a clamping part (25, 26, 29, 30) for clamping to the valve and a locking part (17) lockable in one or more positions with respect to the clamping part (25, 26, 29, 30), to prevent or allow operation of the valve, wherein one of the clamping part (25, 26, 29, 30) or locking part (17)is engageable with a spoke (31) of the handwheel (2) of the valve.

## Description

The present invention relates to a valve lock for handwheel operated valves. There are many valves which are actuated by a plurality of full turns of a hand operated wheel, such as gate valves, globe valves and gear operated valves.

A gate valve comprises a valve part slidable across a flow path to close it. The valve is drivable by rotating a threaded spindle mounted in a threaded bore using a handwheel. A gear operated valve (referred to hereinafter as a gear valve) comprises a valve part which is operable by handwheel via a gear train to obtain a mechanical advantage. These valves all have a body which contains the flow path and the handwheel projecting from the body.

Valve locks are frequently used to prevent unauthorised operation of valves, cocks or other control elements in pipes and piping systems. The term "handwheel operated valve" will be used collectively hereinafter to describe any such handwheel operated control elements.

There are many such designs of valve on the market, each of which is significantly different in body shape and dimensions or in the design and size of spindle, nut, boss or cover plate design.

In the past, it has been the practice to design a valve lock to engage each separate design or size of valve, usually by engagement with the top of the valve body. This requires a lot of design input and little flexibility in use of valve locks. Very complex arrangements have been necessary for handwheel operated valves, such as the Smith Flow Control GL Interlock. This requires to be fitted by a specialist, which may be a problem. The original handwheel of the valve is discarded and replaced by a handwheel incorporated in a valve lock. This may be very difficult to achieve on site and the design problems can be considerable.

It is desired to provide a valve lock for a handwheel operated valve that can be used with as many different designs of valve as possible.

It is also desired to provide a valve lock that can be fitted simply to the valve, preferably with minimum or no alteration of the valve design itself.

The inventor has realised that, although handwheel operated valve designs are very different in size and shape, the majority of handwheel operated valves employ a spoked handwheel. the spokes being of a much smaller range of sizes and designs. The inventor has further realised that a valve lock can be provided, part of which can be engaged with a spoke of a handwheel.

The present invention in a first aspect accordingly provides a valve lock for a handwheel operated valve, comprising a clamping part, for clamping to the valve and a locking part, lockable in one or more positions with respect to the clamping part, to prevent or allow operation of the valve, wherein one of the clamping part or locking part is engageable with a spoke of the handwheel of the valve.

The clamping part preferably comprises clamping surfaces which can be urged towards one another, for example by nuts and bolts.

The clamping part may be clampable to the handwheel spoke itself or to the body of the valve or it may be selectively clampable to the handwheel or to the body. There is a considerable variation in valve body design A valve lock according to the invention having a clamping part for engagement with the valve body only may be less adaptable, but such a valve lock will still have a much enhanced range of application over prior art designs of valve lock, being engageable with many designs of handwheel.

However, the inventor has further realised that gate valves at least are constructed so that a wide range of valves may be relatively simply clamped by a single design of clamping part. This is because a gate valve will always have a frame (called a bonnet) extending from the valve body for supporting the end of the spindle which is attached to the handwheel. This bonnet will always have an opening in it to allow access to the spindle, so that the sealing, gasket or packing around the spindle can be maintained or tightened.

For example, the bonnet normally comprises two upstanding frames around the spindle, with a screwdown arrangement between the frames for bearing on packing around the spindle where the spindle enters the part of the valve body housing the flow path.

This opening or bonnet design provides a convenient part, of a fairly standard size or design to which the clamping part can be clamped. Preferably, therefore, the clamping part is engageable with the bonnet of a gate valve.

The clamping surfaces may be mounted with respect to the clamping part by connections comprising longitudinally extending slots and fixing means (such as nuts with bolts) releasably engageable at variable positions along the slots Preferably, a structure in the form of an angle plate, preferably having slots in each leg of the angle plate, is provided so that plurality of depths and widths of bonnet can be engaged. Clamping surfaces may be urged together by means of arrangements of nuts and bolts which can be tightened to a range of depths of structure.

All the bolts, pins, pegs, screws, nuts etc. used in the present invention are preferably of the design which may only be operated by the use of special tools, for example an Allen key having a central bore for engagement in a hexagonal recess having an upstanding pin for engagement in the bore. This prevents unauthorised disassembly of the valve lock.

With the valve lock of the present invention, it is not necessary to disassemble most types of valve in order to fit the valve lock. It is not necessary to remove the handwheel.

The locking part is preferably movably mounted on the clamping part, movement of the locking part with respect to the clamping part being prevented when the valve lock is locked. For example, the locking part may be pivotally mounted on the clamping part, pivoting motion of the locking part being possible when the valve lock is not locked and pivoting motion being prevented when the valve lock is locked whereby the locking part can prevent relative movement between the handwheel and the valve body. The locking part may comprise a part for abutting one or other of the handwheel or valve body in the locked position, being slidable or rotatable out of abutment in the unlocked position.

In a preferred embodiment, the clamping part may comprise means defining a closed-loop shaped track, the locking part being slidably retained by the track when the valve lock is unlocked but fixed in position when the valve lock is locked. Preferably, the locking part is retained in but slidable along the track. The clamping part may comprise at least two segments each defining a portion of the closed-loop shaped track, the segments being fixable together so that they define an annular body which can surround the spindle of the handwheel so that the locking part can follow the circular motion of the handwheel. Preferably, the closed-loop shaped track is generally circular in configuration, the clamping part being arranged so that the closed-loop shaped track is generally concentric with the spindle of the handwheel. In this case, the locking part may comprise two parts slidably mounted with respect to one another, one part being contained in the track and the other part being for abutment with the handwheel or valve body, so that slight eccentric movement due to the track not being completely concentric with the handwheel spindle can be accommodated.

Any other system for permitting lockable relative motion between the clamping part and the locking part may be adopted.

The locking part may comprise a generally annular slider broken in at least two places (preferably just two places) and mounted in a generally circular track defined in the clamping part. It is broken in two places to allow the segments of the clamping part to be separated to fit around the spindle. Movement of the locking part with respect to the clamping part may be prevented by one or more locking elements, such as locking fingers, which project from the clamping part into the path of the locking part segments in the locked position. Recesses may be formed in the locking part segments for engaging the locking elements.

The valve lock may comprise a key system comprising a removable key and a key recognising mechanism, the locking part being movable with respect to the clamping part when the correct key is engaged with the key recognising mechanism. To lock such a valve lock, the key is removed. Alternatively, there may be a locking mechanism for preventing (or, alternatively driving) movement of the locking part with respect to the clamping part, the locking mechanism being engageable or disengagable by use of an appropriate key, the key being removable after use.

The locking part may simply abut the spokes of a handwheel or the valve body in the locked position. That is, when in the locked position, the locking part may be positioned so that, in its motion with the handwheel or in the motion of the handwheel with respect to it, the locking part will prevent motion of the handwheel beyond a certain point. A certain amount of motion may be possible (such as the angular distance between spokes of a handwheel) but in the designs of normal handwheel operated valves, this will not affect the valve opening significantly.

Where the clamping part is designed to engage that handwheel itself, the locking part may simply comprise a projection that will bear against the valve body in the locked position. This requires no modification of the valve body and is very simple and can be very strong. It allows use with a great variety of valve body designs.

Preferably, the locking part is fixable to the handwheel or valve body, to prevent free movement of the handwheel and to prevent valve operators catching fingers or clothing between the locking part and the valve body or handwheel.

Means for fixing the locking part to the handwheel may comprise means engageable with at least one spoke of the wheel. Preferably, the means for fixing the locking part to the handwheel comprises means for engaging at least two spokes of the wheel at once, comprising first and second parts which are clampable together. The first part may comprise a loop or disc and the second part may comprise two components which can be locked together when in position so that the second part surrounds the shaft of the handwheel. Preferably, the second part comprises a divided loop comprising two parts which are connectable together.

The valve lock may be designed so that it can selectively be engaged with either the valve body or the handwheel. This allows one design to be very flexible in application. The valve body, particularly of a gate valve, may have parts extending parallel to the spindle. The handwheel generally extends perpendicularly to the spindle. Accordingly, the clamping part preferably has clamping surfaces movable together at least in a direction generally normal to the spindle and preferably in two directions at right angles. There may be two sets of clamping surfaces, one for engaging the surfaces of a gate valve, and the other for engaging a handwheel. There may be a set of clamping surfaces which can be reoriented with respect to the clamping part. The valve lock may be provided as a kit having suitable clamping surfaces.

A clamping part for engaging the spokes of a handwheel may comprise a loop with threaded parts on each end, engageable with respective holes in the valve lock or a pair of upstanding parts gripping the spoke there between. It is preferred, however, that the clamping means comprises two upstanding threaded parallel rods and a bridge piece, the bridge piece having a radiussed underside. It has been found that the spokes of handwheels do not normally lie in a plane, being upswept by an angle of 0-30° for example The radiussed underside of the bridge piece allows a variety of upsweep angles of spoke to be accommodated with a smooth contact.

The inventor has also realised that valves, such as gear box, normally have projecting from surfaces thereof, screws or nuts which are part of the structure of the valve. Such screws or nuts may be relatively simple to remove without damaging the valve design. Such screws may then be used to fix a stop surface having suitable bores therein to the valve body. The stop surface may form part of the clamping means or it may be for engaging the locking part.

It is sometimes desired to provide a valve lock that can lock a valve only in the open or closed position. Preferably, such open and closed positions can be preset appropriately for each valve or site. In the past, this has been achieved by providing an integral counting means, for counting the number of rotations of a handwheel before a key can be used to lock the valve.

The present invention may therefore include means for measuring the movement of the spindle or number of rotations of the handwheel, such as a rotation counter. The measuring means or counter may be a separate part which allows the locking part to be locked in the locking position after the required number of rotations. Alternatively, means may be provided for measuring or counting the movement(s) of the locking part with respect to the clamping part. A key system may be provided for preventing movement of the locking part with respect to the clamping part, the counter allowing operation of the key system only after a given number of turns of the handwheel. There may be separate key systems for defining the open and closed positions of the handwheel and there may be corresponding separate counters for each key system.

The measuring means or counter may comprise a wheel, such as Geneva wheel, projecting into the path of motion of the locking part where the locking part moves in a track with respect to the clamping means. The wheel may drive a blocking mechanism, e.g. rack and pinion or threaded rod mounted in a threaded bore, so that rotation of the wheel causes the blocking mechanism to move into or out of engagement with the path of motion of a key or member linked to the motion of a key (for example, part of the locking means for preventing movement of the locking part). The key will then only be removable for operating a lock when the blocking mechanism has been moved out the path of the key or member. The number of rotations of the handwheel required before the key can be removed may be alterable by providing for disengagement of the drive of the blocking mechanism by the locking part. For example, the locking part may be disengaged from the wheel or the wheel may be disengaged from the blocking mechanism. The operator may then disengage the blocking mechanism from the locking part, move the handwheel a number of times to achieve a presetting position and then re-engage drive between the parts.

The locking part may be replaceable, to allow different sizes or designs of valve body or spoke to be engaged.

The design of loop shaped track in the clamping member which is preferred in the first aspect of the invention is considered to be inventive in its own right and the present invention provides, in a second aspect, a valve lock for a handwheel operated valve of the type having a handwheel mounted for rotation on a spindle, the valve lock comprising a clamping part, for clamping to the valve and a locking part, lockable in one or more positions with respect to the clamping part, to prevent or allow operation of the valve, the clamping part comprising means defining a closed-loop shaped track for surrounding the spindle, the locking part being slidably retained by the track when the valve lock is unlocked but fixed in position when the valve lock is locked, so that the locking part can follow the circular motion of the handwheel. Preferably the clamping part comprises at least two segments each defining a portion of the closed-loop shaped track, the segments being fixable together so that they define an annular body containing the closed-loop shaped track which can surround the spindle of the handwheel so that the locking part can follow the circular motion of the handwheel

The locking part may be engageable with the handwheel or the valve body(as in the first aspect of the invention) or with the valve spindle, boss or stem.

The clamping part, locking part etc. of the second aspect of the invention may be as described with respect to the first aspect of the invention. Preferred features of the first aspect of the invention may be used, where appropriate, with the second aspect of the invention.

The invention will be further described by way of example only with reference to the accompanying drawings, in which:
Figure 1 is plan view of a valve lock according to the invention, with a handwheel of a hand operated valve shown in broken lines;
Figure 2 shows a series of steps for clamping a valve lock according to the present invention to a gate valve;
Figure 3 shows the valve lock of the present invention clamped to a gate valve, with a detail of a handwheel clip;
Figure 4 is a side view at enlarged scale of a valve lock according to the present invention mounted on a gate valve;
Figure 5 shows two steps for mounting a valve lock according to the present invention on a gear valve;
Figure 6 shows a valve lock mounted on a gear valve, with a fixing means for fixing the locking part to the valve body;
Figure 7 is a side view of Figure 6;
Figure 8 is a schematic view of a counting mechanism for use in the valve lock of figure 1;
Figure 9 is a plan view of the Geneva wheel of figure 8;
Figure 10 is a cross section of the track in a segment of the clamping part;
Figure 11 shows a second embodiment of fixing means for fixing the locking part to the valve lock;
Figure 12 shows the first component of the fixing means of figure 11, and
Figure 13 shows (at a reduced scale) a second component of the fixing means of figure 11.

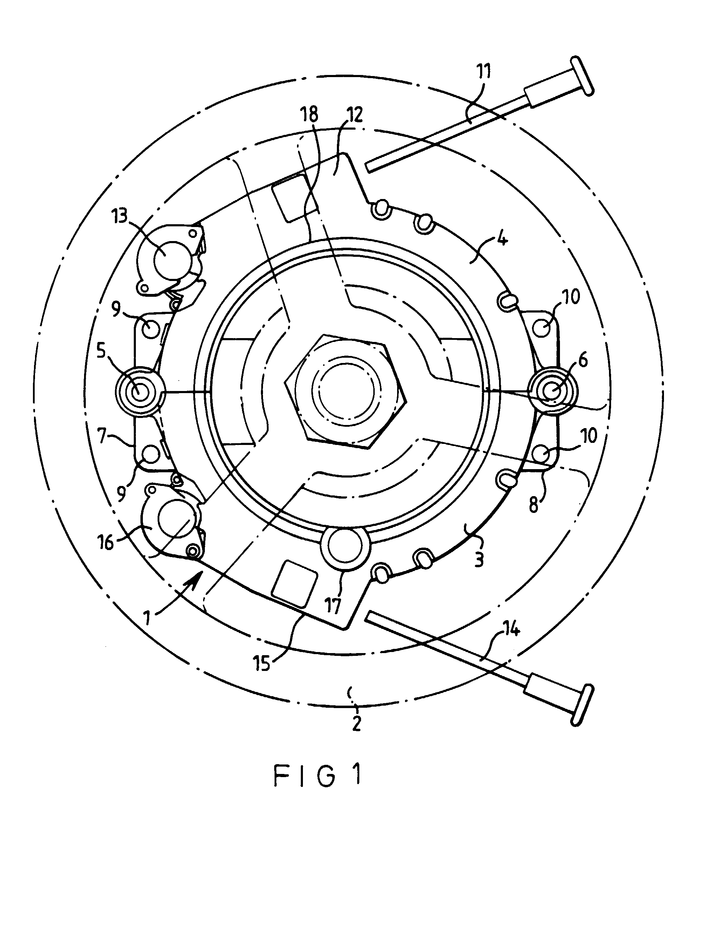

Figure 1 shows, in solid lines, a valve lock 1. The valve lock 1 comprises a clamping part in two segments, 3 and 4. The clamping part is engageable with clamping surfaces which are not shown. The valve lock 1 is designed for engagement with a gate valve or gear valve by the use of clamping surfaces in a manner which will be described below.

The segments are united by a pivot 5 and connection 6. Mountings 7 and 8 having bores 9, 10 are provided on the segments for mounting the clamping surfaces.

There is a key system for locking the valve in the open position, comprising a removable key 11 a key recognising mechanism 12 and a counter 13 which will be described further below.

A corresponding key system comprising removable key 14, key recognising mechanism 15 and counter 16 are provided for locking the valve in the closed position.

The locking part 17 is shown movably retained in a closed circular shaped track 18 defined in the clamping part segments 3 and 4.

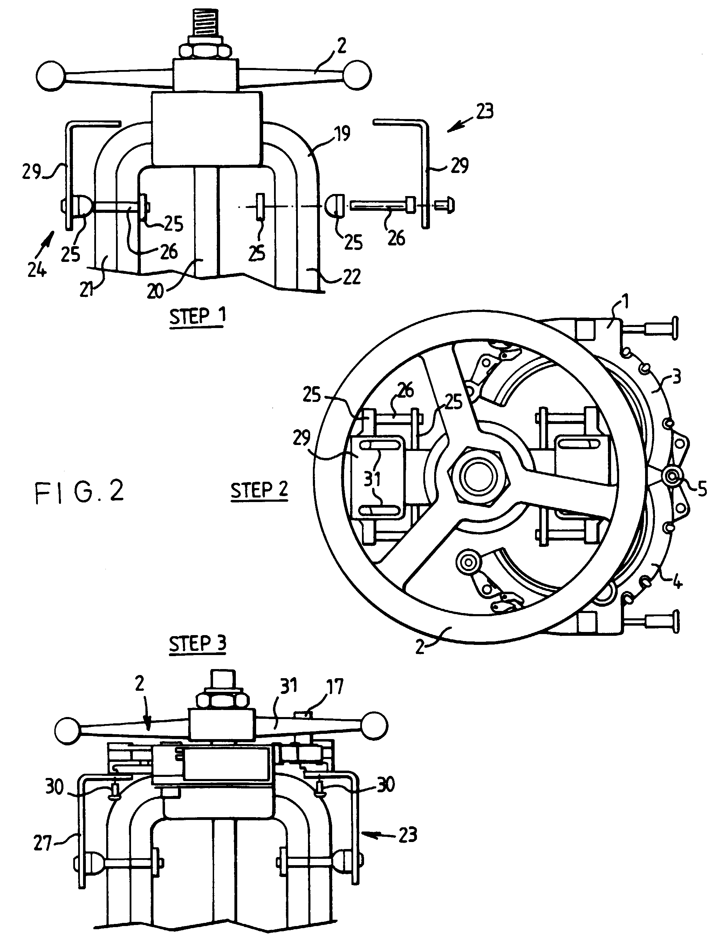

Figure 2 shows a series of steps for mounting the valve lock 1 to a gate valve 19. The gate valve 19 comprises a handwheel 2, spindle 20 and upstanding frames 21 and 22 referred to as a bonnet.

The clamping surfaces (bridge pieces 25 described below) are mounted on structures 23 and 24. In a first step, the structures 23 and 24 are temporarily disengaged from the valve lock 1 and clamped to the upstanding frames 21 and 22 respectively. The structures comprise angle plates 29 and bridge pieces 25. The frames 21 and 22 are gripped between the bridge pieces 25 which are tightened together by arrangements of nuts and bolts 26. The nuts and bolts 26 may be of a design which can only be subsequently released by use of special tools. The bridge pieces 25 themselves are mounted by further nuts and bolts 27 engaged in longitudinally extending slots 28 in one leg of the angle pieces 29. Yet further nuts and bolts or screws 30 are provided engageable through further slots in the other leg of each angle piece 29 for engagement with the bores 9 and 10 of the mountings 7 and 8 of the segments 3 and 4.

By providing longitudinally extending slots and nuts and bolts, different depths widths and spacings of upstanding frames 21 and 22 can readily be accommodated by a single design of structure 23 and 24. Thus, a large number of gate valve designs can be accommodated by one design.

In the second step shown in figure 2, the segments 3 and 4 of the valve lock are disconnected at the connection 6 and pivoted at pivot 5 so that the valve lock 1 can be passed around the spindle 20 of the gate valve. When in position, the segments 3 and 4 are pivoted back together again and connected at connection 6 with a pin. The pin may be of a design which can only be released by use of a special tool.

The third step in figure 2 shows, from a side view, the structures 23 and 24 being reattached to the valve lock 1 by the bolts 30. Other parts are not numbered for clarity. The locking part 17 can be seen projecting between the spokes 31 of the handwheel. Accordingly, when the valve lock 1 is locked so that the locking part 17 cannot move, the locking part 17 will limit movement of the spokes 31 and will prevent operation of the valve to any substantial extent.

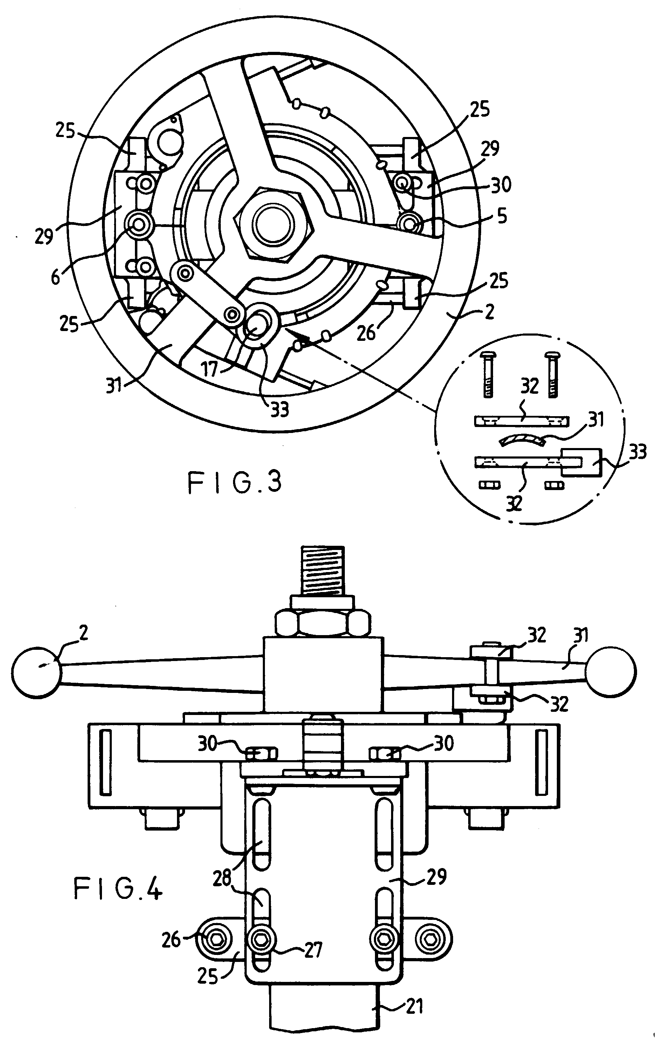

Figure 3 is a plan view of the valve lock 1 engaged with the gate valve 19. The locking part 17 is shown clipped to a spoke 31 of the handwheel by a clip comprising two clip parts 32 bolted together as shown in the detailed section in figure 3. The clip itself is slidably mounted on the locking part 17 via a slide 33 so that any eccentricity due to non-concentric mounting of the valve lock 1 with the spindle 20 can be accommodated.

Figure 4 is a side view, at a greater scale, of the arrangement of figure 3.

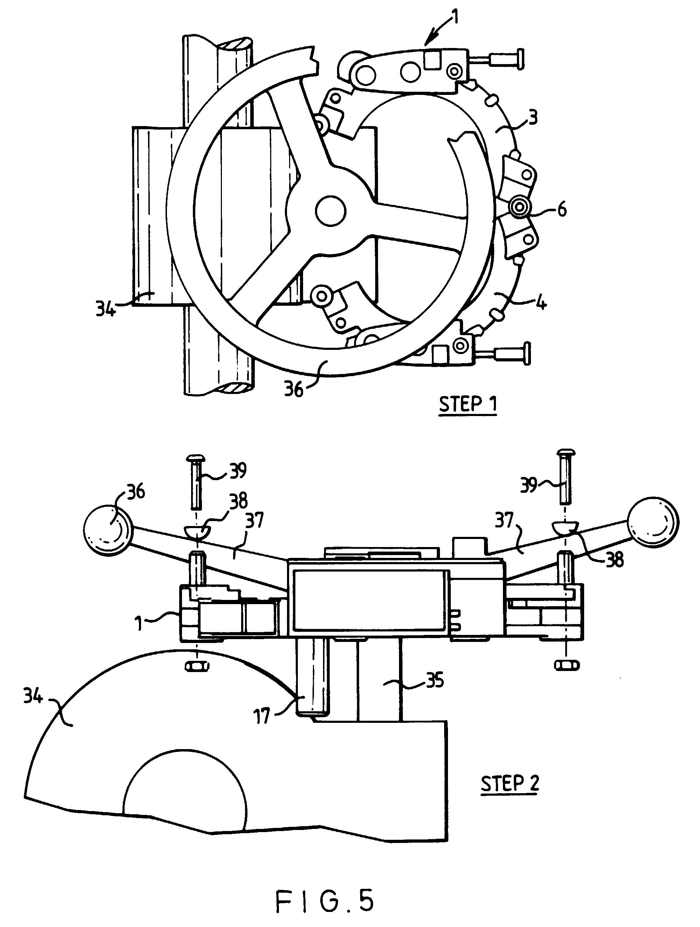

Figure 5 shows two steps in the fixing of a valve lock 1 according to figure 1 to a gear valve 34.

In the first step, the segments 3 and 4 are disconnected at 6, pivoted around the pivot 5 and passed around the spindle 35 of the handwheel 36. It should be noted that figure 5 shows the underside of the valve lock which is shown in figure 1. Once in position, the segments 3 and 4 may be pivoted together and connected securely at the connection 6 with a pin, preferably one which may only be subsequently released with special tools.

The valve lock 1 is then clamped to the spokes 37 of the handwheel using clamping surfaces 38. These are preferably different to the clamping surfaces employed when clamping the valve lock 1 to a gate valve. In a preferred embodiment, the valve lock 1 is provided in the form of a kit having a set of clamping surfaces so that either gate valves or gear valves may be engaged.

The clamping surfaces 38 have radiussed undersides so that they may make a smooth engagement with the upswept spokes 37. The clamping surfaces 38 are fixed to the valve lock 1 by nut and bolt arrangements 39 which extend through the bores 10 and 9 of the mountings 8 and 7 shown in figure 1. The locking part 17 can be seen in figure 5. It is shown abutting the end face of the gear box 34. When the locking part 17 is fixed with respect to the clamping part (the locked position), rotation of the handwheel 36 will clearly be possible until the locking part 17 engages the other end face of the gear valve. However, this amount of movement will not normally be sufficient to affect the opening of the valve.

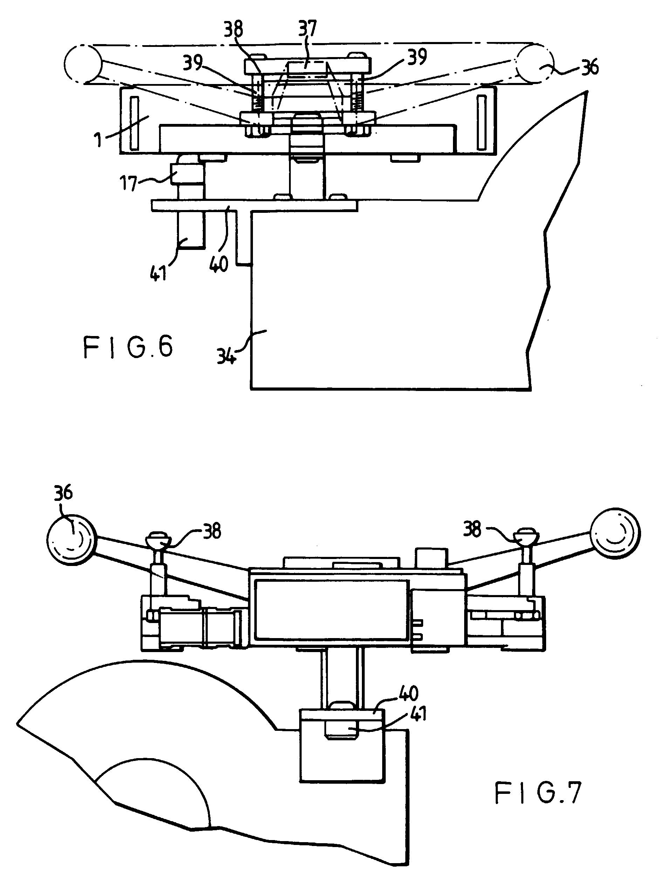

Where even this movement is to be avoided, the arrangements shown in figure 6 may be used. In figure 6, the handwheel 36 is shown in broken lines in side view. The spoke 37 can be seen engaged by the clamping surface 38. A bracket 40 is shown bolted to the body of the gear valve 34. The gear valve may incorporate integral nut and bolt fixings which can be used for this purpose. A bolt 41 is provided passing through the bracket 40 and engaged with the locking parts 17 so that movement of the locking part 17 with respect to the gear valve 34 is prevented.

Figure 7 shows a view of figure 6 from the side, showing the bolt 41 and the bracket 40.

In all of the figures above, the locking part 17 is retained in the closed loop shape track 18 formed in the segments 3 and 4.

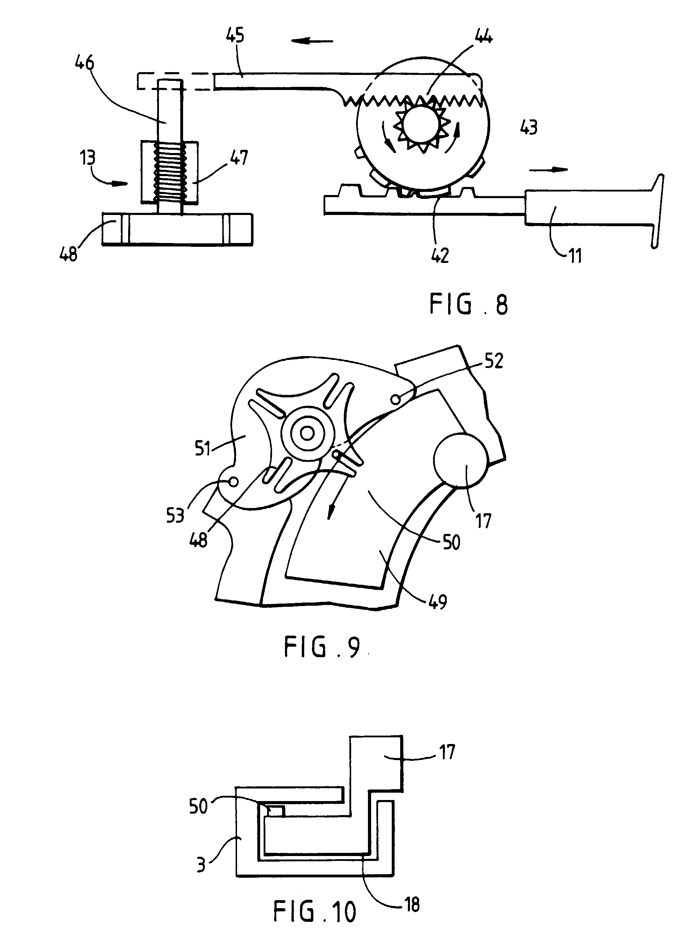

Figure 10 shows a schematic section through the segment 3 showing how the locking part 17 is retained in the track 18.

In the locked position, sliding movement of the locking part 17 in the track 18 is prevented. This may be achieved by any suitable locking means. For example, the locking part 17 may comprise an annularly shaped slider which defines a complete circle and which is broken in at least two places. It defines a complete circle so that the key mechanism (which is at a fixed angular position) can act on the slider at any angular position of the locking part 17. It is broken in at least two places so that the slider will not prevent separation of the segments 3 and 4 when pivoting about the pivot 6. Preferably, there are six slider segments, one of which bears the locking part 17.

The function of peg 50 will be described further below.

Figure 8 is a schematic view of a counter 13 and key system for use in figure 1. The removable key has a coded surface 42. When the key is inserted in the key recognising system 12, a key wheel 43 having projections corresponding exactly to the code formed on the code surface 42 engages the key 11. If the correct key is engaged, the key wheel 43 can be rotated. A rack and pinion system 44 is provided to operate a link 45. The arrangement in figure 8 is shown with the valve lock in the unlocked position, with the removable key 11 inserted in the key recognising mechanism 12. In order to lock the valve, the key 11 must be removed. In the configuration shown in figure 8, removal of the key in a rightward direction would cause the link to be blocked against a blocking mechanism in the form of an end of a threaded rod 46. Removal of the key 11 is therefore not possible. The threaded rod is rotatably mounted in a threaded bushing 47, so that rotation will cause it to move axially. Removal of the key will be possible once the threaded rod 46 has been rotated a sufficient number of time by a wheel 48 to withdraw it from the path of motion of the link 45.

As shown in figure 9 the wheel 48 comprises a Geneva wheel. The Geneva wheel is rotatable by one quarter revolution by a peg 50 mounted on a slider segment which is driven by the locking parts 17. For every rotation of that handwheel, the Geneva wheel is rotated by one quarter turn. After a sufficient number of turns (corresponding to the valve being placed in the open or closed position) the Geneva wheel will be rotated a sufficient number of times for the threaded rod 46 to be withdrawn from the path of motion of the link 45. The key can then be withdrawn and the valve lock locked in position. A mechanism (not shown) drivable by the key wheel 43 or coded surface 42 of the key 11 is provided which, on withdrawal of the key 11, causes locking surfaces to engage at least one of the slider segments mounted in the channel 18.

In the arrangement shown in figure 1 in which there are two key recognising mechanisms 12 and 15, both keys 11 and 14 must be inserted before any movement of the locking part 17 is possible.

In order to alter the number of turns of the handwheel required to permit or allow removal of the key 11 or 14, the Geneva wheel 48 is pivoted in a mounting 51 which is itself pivotally mounted at pivot 52 on the valve lock. Normally, pivoting of the mounting 51 is prevented by a further pin 53 which is removably mounted on the valve lock. When the pin 53 is removed, the mounting can be swung away from the valve lock so that the peg 50 does not engage the Geneva wheel 48. The handwheel may then be turned a suitable number of turns to alter the position of the valve without altering the position of the threaded rod 46. Thus, valves with different open and close positions can be accommodated by one design of valve lock.

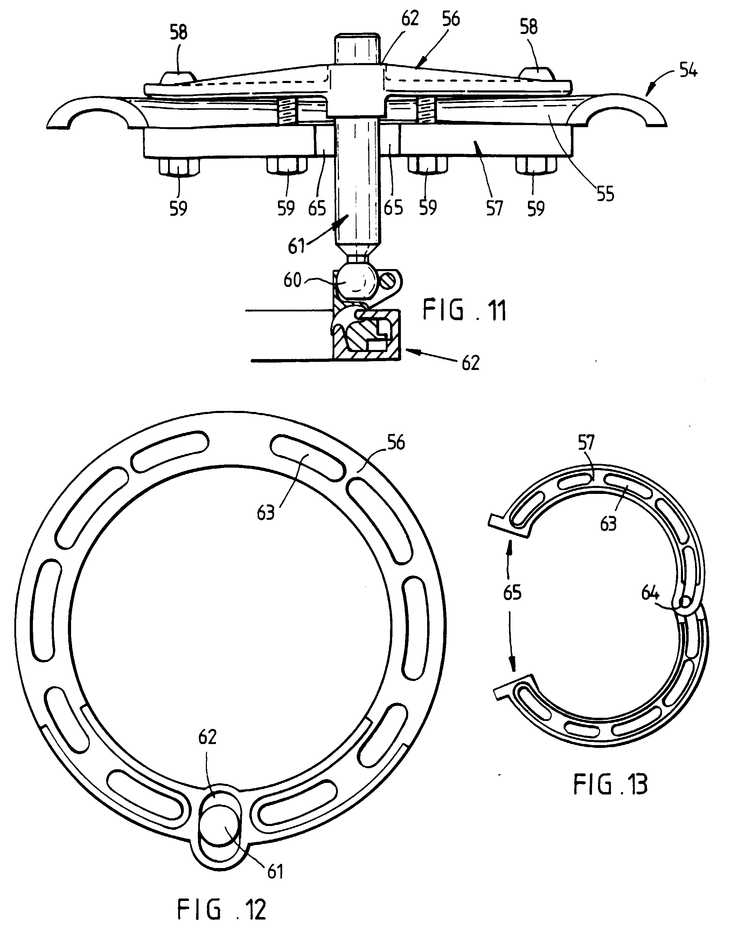

Figure 11 shows a further embodiment of fixing means for fixing the locking part to the spokes of a handwheel. The handwheel 54 having spokes 55 can be seen from the side. A first component 56 of the fixing part and the second component 57 of the fixing part can be seen gripping the spokes 55 between them. The first and second components 56 and 57 are held together by nuts and bolts 58, 59. Preferably, these are of the type which may not be released without the use of special tools. Figure 11 also shows a ball-and-socket arrangement at the base of the locking part 61 where the locking part 61 is connected to the rest of the clamping means 62. This is a modified embodiment of the arrangement shown in figure 10. The ball-and-socket arrangement 60 allows for flexing movement of the lock 61 with respect to the rest of the clamping means to take up movements between the handwheel and the valve body caused by application of force to the handwheel. The locking part 61 passes through a collar 62 formed in the first component 56 of the fixing means and is slidable therein.

Figure 12 shows a plan view of the first component of the fixing mean. It comprises a generally circular loop having lightening holes therein. The loop is built-up on one side to define the sleeve 62 in which the locking part 61 is retained. The sleeve 62 comprises a slot which is longer than the diameter of the locking part 61, so that slight movements due to the first component being mounted not quite concentric with the handwheel shaft can be taken up.

Figure 13 shows, at a reduced scale, the second part 57 of the fixing means. The second part has slots 63 corresponding to the slots 63 of the first component, through which nut and bolt assemblies may be passed. This allows the handwheel to be gripped between the first and second components. The second component is hinged at 64 so that it can be opened to pass around the valve spindle. This allows the valve spindle to be left in position during assembly. When in position, the second part 57 can be closed to define an almost complete loop. In the embodiment shown, the ends 65 of the segments of the second component will not quite meet - they will instead abut the locking part 61 as shown in figure 11.

The invention has been described above by way of example and modifications can be made within the spirit of the invention. The present invention also consists in any individual features described or implicit herein or shown or implicit in the drawings or any combination of such features or any generalisation of any such features or combination.

## Claims

1. A valve lock for a handwheel operated valve, comprising a clamping part for clamping to the valve and a locking part, lockable in one or more positions with respect to the clamping part, to prevent or allow operation of the valve, wherein one of the clamping part or locking part is engageable with a spoke of the handwheel of the valve.

2. A valve lock according to claim 1, wherein the clamping part is engageable with a bonnet of a gate valve.

3. A valve lock according to claim 1 or 2, wherein the locking part is movably mounted with respect to the clamping part, movement of the locking part with respect to the clamping part being prevented when the valve lock is locked.

4. A valve lock according to claim 3, wherein the locking part comprises a part for abutting one or other of the handwheel or valve body in the locked position, being slidable or rotatable out of abutment in the unlocked position.

5. A valve lock according to claim 1, 2, 3 or 4 wherein the clamping part comprises means defining a closed-loop shaped track the locking part being slidably retained by the track when the valve lock is unlocked but fixed in position when the valve lock is locked.

6. A valve lock according to claim 5, wherein the locking part is retained in but slidable along the closed-loop shaped track.

7. A valve lock according to any preceding claim wherein the clamping part comprises at least two segments each defining a portion of the closed-looped shaped track, the segments being fixable together so that they define an annular body which surrounds the spindle of the handwheel so that the locking part can follow the circular motion of the handwheel.

8. A valve lock according to any preceding claim, wherein the locking part comprises a generally annular slider broken in at least two places and mounted in a generally circular track defined in the clamping part.

9. A valve lock according to any preceding claim, 1 selectively engageable with a valve body or a handwheel of a valve.

10. A valve lock according to any preceding claim, including means for measuring the movement of the spindle or number of rotations of the handwheel.

11. A valve lock according to claim 10, wherein the locking part moves in a track with respect to the clamping means and the measuring means comprises a wheel projecting into the path of motion of the locking part,.

12. A valve lock for a handwheel operated valve of the type comprising a handwheel mounted for rotation on a spindle, the valve lock comprising a clamping part, for clamping to the valve and a locking part, lockable in one or more positions with respect to the clamping part, to prevent or allow operation of the valve, the clamping part comprising means defining a closed-loop shaped track for surrounding the handwheel spindle, the lockable part being slidably retained by the track when the valve lock is unlocked but fixed in position when the valve lock is locked, so that the locking part can follow the circular motion of the handwheel.
